# EUROPÄISCHE PATENTSCHRIFT

(11) **EP 2 651 743 B1**
(45) Veröffentlichungstag und Bekanntmachung des Hinweises auf die Patenterteilung: **01.10.2014**
(21) Anmeldenummer: 11794619.4
(22) Anmeldetag: 16.11.2011
(51) Int. Cl.: B62D 1/19

(54) **LENKSÄULE FÜR EIN KRAFTFAHRZEUG**
STEERING COLUMN FOR A MOTOR VEHICLE
COLONNE DE DIRECTION POUR UN VÉHICULE AUTOMOBILE

(30) Priorität: 15.12.2010 DE 102010061268
(43) Veröffentlichungstag der Anmeldung: 23.10.2013
(73) Patentinhaber: ThyssenKrupp Presta Aktiengesellschaft, 9492 Eschen (LI)
(72) Erfinder: DOMIG, Markus, A-6781 Bartholomäberg (AT); GOGOS, Odisseas, CH-9450 Altstätten (CH); PLANGGER, Karl, A-6850 Dornbirn (AT)
(74) Vertreter: Fechner, Thomas
(86) Internationale Anmeldenummer: PCT/AT2011/000463
(87) Internationale Veröffentlichungsnummer: WO 2012/079096

(56) Entgegenhaltungen:
- EP-A1- 1 479 593
- WO-A1-2009/121386
- DE-A1- 2 821 707
- GB-A- 2 288 154

## Beschreibung

Die vorliegende Erfindung betrifft eine Lenksäule für ein Kraftfahrzeug, welche zumindest in einer Längsrichtung verstellbar ist, mit einer Konsoleneinheit zur Befestigung der Lenksäule an einer Karosserie des Kraftfahrzeugs und mit zumindest einer Lenkspindellagereinheit zur drehbaren Lagerung einer Lenkspindel der Lenksäule und mit zumindest einer Biegelasche zur Energieabsorption bei einer Bewegung der Lenkspindellagereinheit relativ zur Konsoleneinheit mittels Umformung der Biegelasche, wobei zumindest zwei Biegeschenkel der Biegelasche, mittels zumindest einer Umbiegung der Biegelasche miteinander verbunden sind und einer der Biegeschenkel an der Lenkspindellagereinheit befestigt ist und der andere Biegeschenkel mittels zumindest einer zerstörungsfrei lösbaren Verbindungseinrichtung an der Konsoleneinheit befestigt oder befestigbar ist.

Lenksäulen dieser Art sind beim Stand der Technik an sich bekannt. Die WO 2009/121386 A1 offenbart verschiedene Ausführungsformen von solchen Lenksäulen. Sie erwähnt bereits, dass die im Crashfall zur Energieabsorption vorgesehene Biegelasche eine reine Biegelasche aber auch eine Aufreißbiegelasche sein kann. Bei einer reinen Biegelasche erfolgt die Energieabsorption bei Bewegung der Lenkspindellagereinheit relativ zur Konsoleneinheit ausschließlich mittels Umformung der Biegelasche. Bei Reißbiegelaschen kann zusätzlich zur Umformung noch eine weitere Energieabsorption erreicht werden, indem die Biegelasche aus einem Rahmen oder dergleichen herausgerissen wird.

Bei gattungsgemäßen verstellbaren Lenksäulen, wie bei den in der WO 2009/121386 A1 gezeigten Varianten, wird die zerstörungsfrei lösbare Verbindungseinrichtung dazu benötigt, die Verstellung der Lenksäule zu ermöglichen. So muss die Verbindungseinrichtung in den gelösten Zustand gebracht werden, sodass die gewünschte Verstellung der Lenksäule durchführbar ist. Andererseits muss die zerstörungsfrei lösbare Verbindungseinrichtung in ihrem Verbindungszustand den anderen Biegeschenkel aber so fest mit der Konsoleneinheit verbinden, dass es nicht durch crashbedingte Verformungen im Crashfall zu einem unbeabsichtigten Lösen der Verbindungseinrichtung kommt. Die Praxis zeigt, dass die gattungsgemäßen verstellbaren Lenksäulen im Crashfall unter Umständen ein ungünstiges Verhalten aufweisen. Insbesondere ist es möglich, dass die von der Verbindungseinrichtung geschaffene Verbindung bei entsprechenden Kräften und Richtungen ungewollt geöffnet wird.

Aufgabe der Erfindung ist es, eine gattungsgemäße Lenksäule dahingehend zu verbessern, dass sie möglichst wenig Bauraum beansprucht. Weiters soll verhindert werden, dass der Biegestreifen bei der Relativbewegung der Lenkspindellagereinheit zur Konsoleneinheit im Crashfall angehoben wird.

Bei einer erfindungsgemäßen Lenksäule wird dies durch die Merkmale des Patentanspruchs 1 erreicht.

Es ist somit vorgesehen, dass an der Lenkspindellagereinheit zumindest eine Niederhalteeinrichtung mit zumindest einer Führungswand zur Begrenzung eines Abhebens des an der Konsoleneinheit befestigten oder befestigbaren Biegeschenkels von der Lenkspindeilagereinheit beim Umformen der Biegelasche angeordnet ist.

Die Führungswand der Niederhalteeinrichtung begrenzt den Raum, in dem ein Abheben des an der Konsoleneinheit mittels Verbindungseinrichtung befestigten Biegeschenkels überhaupt möglich ist. Je nach Abstand zwischen der entsprechenden Außenwand der Lenkspindellagereinheit und der Führungswand der Niederhalteeinrichtung kommt es entweder zu gar keinem oder nur zu einem sehr geringfügigen Abheben des genannten Biegeschenkels von der Lenkspindellagereinheit. Ein weitergehendes Abheben wird von der Führungswand verhindert. Durch die Anordnung der Niederhalteeinrichtung an der Lenkspindellagereinheit können der Bauraum und die Anforderungen an die Toleranzen der Bauteile reduziert werden. Insbesondere genügt es nur den relativ kurzen Bereich, in dem die fortschreitende Verformung des Biegeschenkels erfolgt, mit der Niederhalteeinrichtung auszubilden.

Der Bereich, in dem der eine Biegeschenkel mit der zerstörungsfrei lösbaren Verbindungseinrichtung an der Konsoleneinheit befestigt werden kann, muss keine besonderen Bedingungen erfüllen, mit deren Hilfe eine Niederhalterfunktion darstellbar wäre. Dadurch ergeben sich erhebliche Freiheiten in der Entwicklung. Mit Vorteil können diese neuen Freiheiten zur Darstellung der zerstörungsfrei lösbaren Verbindungseinrichtung genutzt werden. Zum Einsatz kommt die Verhinderung des Abhebens des Biegeschenkels von der Führungswand in der Regel nur, wenn sich die zerstörungsfrei lösbare Verbindungseinrichtung in ihrer Arretierstellung befindet, in der der Biegeschenkel an ihr befestigt ist und wenn es auf Grund eines Fahrzeugcrashes oder dergleichen in dieser Stellung der Verbindungseinrichtung zu einer Relativbewegung, insbesondere zu einem gegeneinander Verschieben, von Lenkspindellagereinheit und Konsoleneinheit kommt.

Bei erfindungsgemäßen Lenksäulen handelt es sich um sogenannte verstellbare Lenksäulen, zumindest in Längsrichtung. Um die Position des Lenkrades an den jeweiligen Fahrer anpassen zu können, sehen diese Lenksäulen vor, dass Lenkspindellagereinheit und Konsoleneinheit mit geringem Kraftaufwand relativ zueinander bewegt werden können, wenn eine entsprechende Feststelleinrichtung in ihrer geöffneten Stellung ist. In der Schließstellung der Feststelleinrichtung ist die Lenkspindellagereinheit so fest an der Konsoleneinheit gehalten, dass es im Normalbetrieb des Kraftfahrzeugs zu keiner Relativbewegung zwischen Lenkspindellagereinheit und Konsoleneinheit kommt. Erst im Crashfall treten dann, z.B. wenn der Fahrer gegen das Lenkrad geschleudert wird, so hohe Kräfte auf, dass der mittels Biegelasche realisierte Energieabsorptionsvorgang vonstatten geht. Zur Darstellung des Energieabsorptionsvorgangs ist es erforderlich, dass die Biegelasche mit der Konsoleneinheit zumindest während des Crashs verbunden ist. Hierzu kann bevorzugt die zerstörungsfrei lösbare Verbindungseinrichtung dienen. Die zerstörungsfrei lösbare Verbindungseinrichtung kann nach Bedarf zwischen einem geschlossenen Zustand in der genannten Arretierstellung, bei dem einer der Biegeschenkel mit der Konsoleneinheit verbunden ist und einem geöffneten Zustand, bei dem der Biegeschenkel nicht mit der Konsoleneinheit verbunden ist, eingestellt werden. Insbesondere kann das Umschalten zwischen der geschlossenen und der geöffneten Stellung mehrfach erfolgen. Insbesondere wird es daher bei der verstellbaren Lenksäule ermöglicht, mittels der Verbindungseinrichtung, in der geöffneten Stellung der Feststelleinrichtung, die Verbindung zwischen der Biegelasche und der Konsoleneinheit zu lösen, um eine Verschiebung ohne Energieabsorption an der Biegelasche zu ermöglichen. Dieselbe Verbindungseinrichtung ist in der geschlossenen Stellung der Feststelleinrichtung vorzugsweise in ihrer Arretierstellung, bei der entweder unmittelbar oder nach einer kleinen Relativbewegung zwischen Lenkspindellagereinheit und Konsoleneinheit eine Verbindung zwischen der Biegelasche und Konsoleneinheit hergestellt ist. Eine derartige Verbindungseinrichtung kann im einfachsten Fall durch einen Haken mit zumindest einem Rastzahn gebildet werden, wobei der Rastzahn in der Arretierstellung, feder-elastisch vorgespannt, auf den Biegestreifen gedrückt wird. In dem Biegestreifen sind Aussparungen vorgesehen, in die der Haken direkt oder nach einer kleinen Relativbewegung zwischen der Lenkspindellager-einheit und Konsoleneinheit einrastet. Es können anstelle eines Hakens mit einem Rastzahn auch mehrere Rastzähne und/oder mehrere Haken auch unterschiedlicher Größe vorgesehen sein, um den Eingriff zu erleichtern.

Im Crashfall wird bei geschlossener Feststelleinrichtung die Lenkspindellagereinheit relativ zur Konsoleneinheit bewegt, vorzugsweise verschoben. Mittels Umformung der Biegelasche kommt es zur gewünschten Energieabsorption, um Verletzungen des Fahrers möglichst zu vermeiden bzw. so stark wie möglich abzumildern. Die erfindungsgemäße Niederhalteeinrichtung sorgt in diesem Crashfall dafür, dass sich die Biegelasche bei ihrer Umformung gar nicht bzw. nicht allzu weit von der Lenkspindellagereinheit abhebt. Hierdurch muss nur ein geringer Bauraum für die Biegelasche vorgesehen werden. Der Niederhalter bietet weiters die Möglichkeit, den Biegeradius der Biegelasche in ihrer Umbiegung begrenzt zu halten, ohne dass es hierfür notwendig ist, dass die Biegelasche um einen Amboss, ein Umformelement oder dergleichen herumgebogen wird. Der Vorteil eines Verzichts auf einen Amboss bzw. auf ein Umformelement, um das die Biegelasche beim Umformen herumgebogen bzw. herumgezogen wird, ist vor allem in zwei Aspekten zu sehen. Einerseits entfällt die Notwendigkeit eines zusätzlichen Elementes in Form von Amboss bzw. Umformelement. Andererseits hat die Praxis gezeigt, dass, wenn solche Umformelemente bzw. Ambosse verwendet werden, die zwischen Biegelasche und Amboss bzw. Umformelement auftretenden Reibungskräfte nur schwer zu kontrollieren bzw. nur schwer voraussagbar sind. Bei der Umformung der Biegelasche mittels der erfindungsgemäßen Niederhalteeinrichtung handelt es sich günstigerweise um eine Umformung ohne Amboss bzw. Umformelement, deren Bewegungsbahn durch die Führungswand bzw. die Führungswände der Niederhalteeinrichtung vorgegeben bzw. begrenzt ist.

Es kann sich bei der Erfindung um eine reine Biegelasche, aber auch um eine kombinierte Reißbiegelasche, also um eine Biegelasche handeln, bei der zusätzlich zum reinen Umformen auch ein Aufreißen vorgesehen ist. Bevorzugte Ausgestaltungen der Erfindung sehen vor, dass der an der Konsoleneinheit befestigte oder befestigbare Biegeschenkel zumindest beim Umformen der Biegelasche an der Fühungswand anliegt. Die Begrenzung des Abhebens erfolgt dabei dann also, indem der an der Konsoleneinheit befestigte Biegeschenkel zumindest beim Umformen der Biegelasche an der Führungswand zur Anlage kommt.

Besonders bevorzugte Ausgestaltungsformen der Erfindung sehen eine kanalartig ausgebildete Niederhalteeinrichtung vor. In diesem Sinne ist es günstig, wenn die Niederhalteeinrichtung zumindest eine zusätzliche Führungswand aufweist, wobei die Biegeschenkel zumindest bereichsweise zwischen den einander gegenüberliegend angeordneten Führungswänden angeordnet sind. Bei diesen Ausgestaltungsformen ist wiederum bevorzugt vorgesehen, dass der an der Lenkspindellagereinheit befestigte Biegeschenkel zumindest beim Umformen der Biegelasche an der zusätzlichen Führungswand anliegt.

Der Vollständigkeit halber wird darauf hingewiesen, dass es sich bei dem an der Lenkspindellagereinheit befestigten Biegeschenkel um den Teil der Biegelasche handelt, welcher zur Befestigung der Biegelasche an der Lenkspindellagereinheit dient. Umgekehrt handelt es sich bei dem, mittels zumindest einer zerstörungsfrei lösbaren Verbindungseinrichtung an der Konsoleneinheit befestigten oder befestigbaren Biegeschenkel um den Teil der Biegelasche, welcher zur Befestigung der Biegelasche an der Konsoleneinheit dient. Dass der an der Lenkspindellagereinheit befestigte Biegeschenkel natürlich über die Umbiegung und den anderen Biegeschenkel auch an der Konsoleneinheit befestigbar bzw. befestigt ist, und umgekehrt, ist hiermit nicht gemeint. Weiters wird darauf hingewiesen, dass der Begriff der Biegelasche breit auszulegen ist. Insbesondere kann die Biegelasche aus einem band- und/oder drahtartigen Material bestehen. Weiters ist es denkbar und möglich, dass die Biegelasche bei der Umformung aus einem Grundkörper herausgerissen wird, und entsprechend auch als Biegereißlasche ausgebildet sein kann. Diese Ausführungsform ist im Rahmen der vorliegenden Erfindung vom Begriff "Biegelasche" mit umfasst.

Durch eine Einsenkung in der Lenkspindellagereinheit kann die Biegelasche mit ihren, insbesondere u-förmig angeordneten, Biegeschenkeln zumindest teilweise in der Tiefe der Lenkspindellagereinheit versenkt werden. Entsprechend ist günstigerweise der Biegeschenkel, der an der Lenkspindellagereinheit befestigt ist, mit einem geringerem Abstand zu einer Drehachse, um die die Lenkspindel drehbar ist, als die diesen Biegeschenkel umgebenden Bereiche einer Außenwand der Lenkspindellagereinheit angeordnet. Zusätzlich zum Biegeschenkel, ist mit Vorteil der Bereich, in dem die Umformung der Umbiegung der Biegelasche im Crashfall erfolgen soll, zwischen einer Wand, die mit einem geringerem Abstand zu einer Drehachse, um die die Lenkspindel drehbar ist, als die diesen Biegeschenkel umgebenden Bereiche einer Außenwand der Lenkspindellagereinheit und der Führungswand zur Begrenzung des Abhebens der Biegelasche der Niederhalteeinrichtung angeordnet. Entsprechend ist es denkbar und möglich, die Außenwand der Lenkspindellagereinheit in dem entsprechenden Bereich gegenüber den Nachbarbereichen abzusenken.

In diesem Sinne ist es günstig, wenn entsprechend eine Niederhalteeinrichtung mit einer zusätzlichen Führungswand ausgebildet ist und die Niederhalteeinrichtung derart an der Lenksäule angeordnet ist, dass die zusätzliche Führungswand näher an einer Drehachse, um die die Lenkspindel drehbar ist, als die diese zusätzliche Führungswand umgebenden Bereiche einer Außenwand der Lenkspindellagereinheit und/oder als die Führungswand zur Begrenzung des Abhebens des an der Konsoleneinheit befestigten oder befestigbaren Biegeschenkels angeordnet ist. Für diesen Fall kann die Außenwand der Lenkspindellagereinheit in dem entsprechenden Bereich ausgeschnitten sein, so dass die zusätzliche Führungswand versenkt von außen in die Lenkspindellagereinheit eingelassen werden kann.

Die Niederhalteeinrichtung kann als eine zunächst separat gefertigte und dann an der Lenkspindellagereinheit angeordnete Einheit ausgebildet sein. In alternativen Ausgestaltungsformen kann die Niederhalteeinrichtung aber auch ein einstückig angeformter Bestandteil der Lenkspindellagereinheit und insbesondere deren Außenwand sein.

Weitere Einzelheiten und Merkmale bevorzugter Ausgestaltungsformen der Erfindung werden anhand der Figuren erläutert. Es zeigen:
Fig. 1 eine perspektivische Ansicht auf ein erstes Ausführungsbeispiel einer erfindungsgemäßen Lenksäule in einer um 180° gegenüber der Einbausituation gedrehten Stellung;
Fig. 2 ein zweites erfindungsgemäßes Ausführungsbeispiel einer erfindungsgemäßen Lenksäule in einer Stellung gemäß Einbausituation;
Fig. 3 bis 5 Längsschnitte durch dieses zweite erfindungsgemäße Ausführungsbeispiel;
Fig. 6 die zur Verwendung kommende Biegelasche;
Fig. 7 die zur Verwendung kommende Niederhalteeinrichtung;
Fig. 8 eine Detaildarstellung zum verwendeten Beispiel einer zerstörungsfrei lösbaren Verbindungseinrichtung und
Fig. 9 ein weiteres Ausführungsbeispiel der Erfindung in einer zu Fig. 5 analogen Stellung.

Gleichartige oder gleichwirkende Elemente werden in den Figuren mit denselben Bezugszeichen bezeichnet.

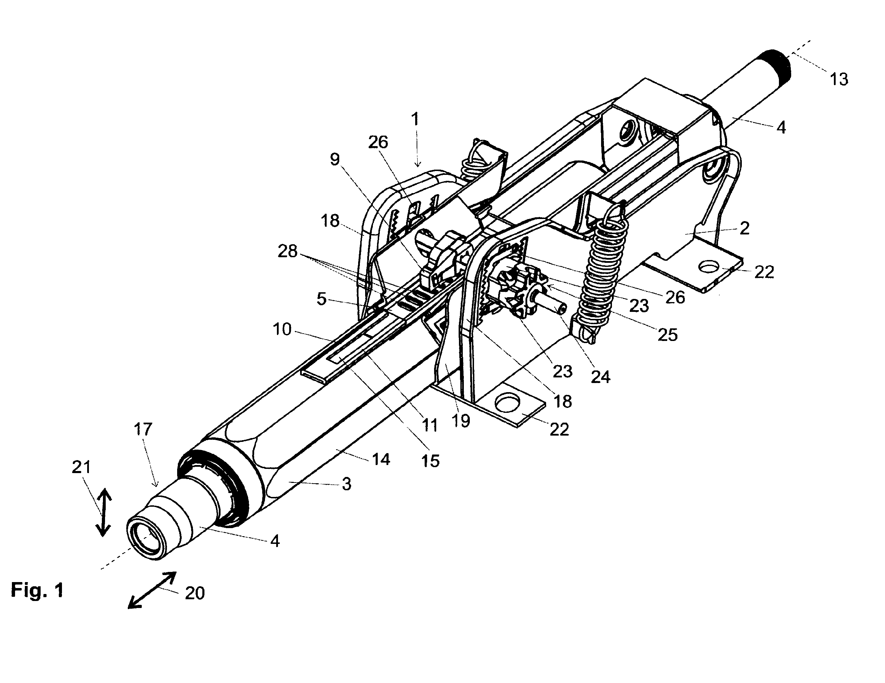

Die in Fig. 1 dargestellte Lenksäule 1 ist erfindungsgemäß mit einer entsprechenden Niederhalteeinrichtung 10 ausgestattet. Bevor auf diese erfindungswesentlichen Details eingegangen wird, wird aber zunächst der ansonsten an sich bekannte Aufbau der Lenksäule hier kurz geschildert. Die Lenksäule 1 weist die Konsoleneinheit 2 auf, welche dazu dient, die Lenksäule 1 an der Karosserie des Fahrzeugs zu befestigen. Im gezeigten Ausführungsbeispiel sind hierzu die Befestigungslaschen 22 der Konsoleneinheit 2 vorgesehen, mittels derer letztere an der Karosserie festgeschraubt oder anderweitig befestigt werden kann. Die Konsoleneinheit 2 weist zwei Seitenwangen 18 auf, zwischen denen die Lenkspindellagereinheit 3 gehalten ist. Im gezeigten Ausführungsbeispiel befindet sich zwischen der Konsoleneinheit 2 bzw. deren Seitenwangen 18 und der Lenkspindellagereinheit 3 ein sogenannter Zwischenhebel 19, wie dies beim Stand der Technik häufig der Fall ist. Es handelt sich im gezeigten Ausführungsbeispiel um eine sogenannte verstellbare Lenksäule 1 mit einer an sich bekannten Feststelleinrichtung 25. Befindet sich die Feststelleinrichtung 25 in der geöffneten Stellung, so kann die Lenkspindellagereinheit 3 mit geringem Kraftaufwand zur Längenverstellung in den Verstellrichtungen 20 und/oder zur Höhenverstellung in den Verstellrichtungen 21 relativ zur Konsoleneinheit 2 und damit relativ zur Karosserie verstellt werden. Hierdurch wird auch das an dem Montagestutzen 17 der Lenkspindel 4 zu befestigende Lenkrad entsprechend verstellt, womit der jeweilige Lenker des Fahrzeugs die Position des Lenkrades an seine individuellen Bedürfnisse anpassen kann. Die Lenkspindel 4 ist in der Lenkspindellagereinheit 3 um die Drehachse 13 drehbar gelagert. Bei der Lenkspindellagereinheit 3 handelt es sich um eine Art Manteleinheit, deren Außenwand 14 die Lenkspindel 4 umgreift.

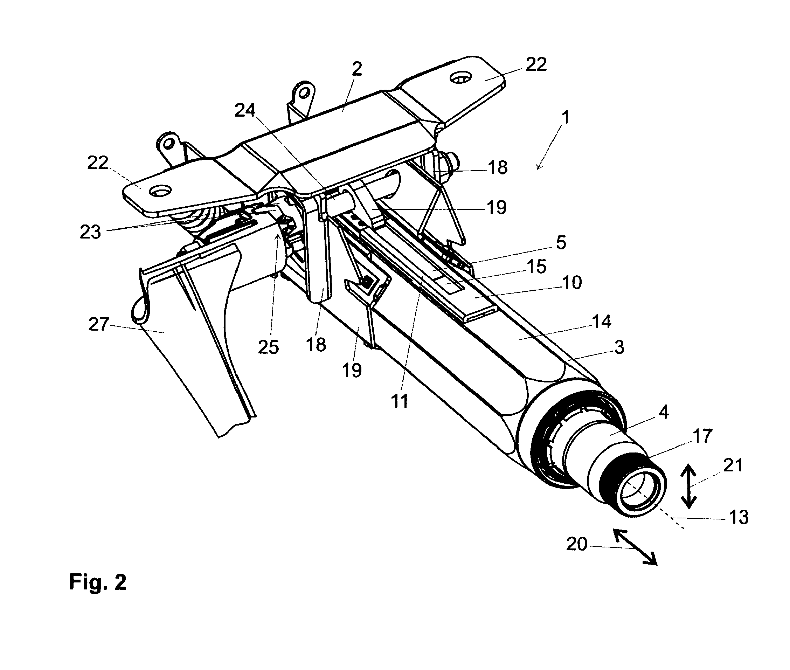

Die Feststelleinrichtung 25 weist, wie an sich bekannt, einen Bolzen 24 in Form eines Spannbolzens auf. Auf diesem sind zwei mit ihren Nocken aufeinander zu gerichtete Nockenscheiben 23 angeordnet. Die eine der Nockenscheiben 23 kann z.B. drehfest am Bolzen 24, die andere der Nockenscheiben 23 dann drehfest an einer der Seitenwangen 18 befestigt sein. Durch Verdrehen des Spannbolzens 24 werden damit auch die Nockenscheiben 23 und die auf ihnen angeordneten Nocken gegeneinander verdreht, wodurch die Feststelleinrichtung 25 in ihren geöffneten und in ihren geschlossenen Zustand gebracht werden kann. Zum Drehen des Spannbolzens 24 können Motoren, aber auch Handhebel 27 vorgesehen sein. Es sind auch Varianten denkbar, bei denen der Bolzen 24 selbst nicht gedreht wird. In der Schließstellung der Feststelleinrichtung 25 ist das Fahrzeug betriebsbereit und die Lenkspindellagereinheit 3 bezüglich der im Normalbetrieb auftretenden Kräfte in ihrer Position fixiert. Im geöffneten Zustand der Feststelleinrichtung 25 sind Verstellungen in die Verstellrichtungen 20 und/oder 21, also in Längs- und/oder Höhenrichtung möglich. Es ist auch denkbar, dass nur eine der Verstellrichtungen, also entweder nur eine Höhen- oder nur eine Längsverstellung vorgesehen ist. Der geschilderte Klemm- bzw. Feststellmechanismus 25 kann, wie beim Stand der Technik an sich bekannt, rein auf Reibschluss, aber auch rein auf Formschluss oder auch auf einer Kombination dieser beiden Mechanismen beruhen. Im gezeigten Ausführungsbeispiel ist in den Seitenwangen 18 jeweils ein Langloch 26 vorgesehen, durch das der Spannbolzen 24 hindurchgeführt ist. Die Langlöcher 26 erlauben ein Verschieben des Spannbolzens 24 samt Lenkspindellagereinheit 3 in den Verstellrichtungen 21. Zur Längsverstellung in den Verstellrichtungen 20 wird die Lenkspindellagereinheit 3 im Zwischenhebel 19 verschoben. In der Schließstellung der Feststelleinrichtung 25, in der das Fahrzeug gefahren wird, ist die zerstörungsfrei lösbare Verbindungseinrichtung 9 dazu vorgesehen, den Biegeschenkel 7 zumindest im Crashfall an der Konsoleneinheit 2 zu befestigen. Bei geöffneter Feststelleinrichtung 27 muss diese Verbindung des Biegeschenkels 7 mit der Konsoleneinheit 2 gelöst werden, damit die bereits geschilderten Anpassungen der Position des Lenkrades in den Verstellrichtungen 20 und 21 vonstatten gehen können. Im gezeigten Ausführungsbeispiel handelt es sich, wie weiter unten noch im Detail beschrieben, bei der zerstörungsfrei lösbaren Verbindungseinrichtung 9 um einen schwenkbaren Haken. Im gezeigten Ausführungsbeispiel ist dieser schwenkbare Haken auf dem Bolzen 24 der Feststelleinrichtung 25 gelagert. Beim Stand der Technik sind unterschiedlichste Verbindungseinrichtungen 9, welche grundsätzlich zum Einsatz kommen können, bekannt. Diese können als Alternativen zu hier gezeigten Realisierungsformen entsprechend adaptiert werden. Von der Biegelasche 5 ist in der Darstellung gemäß Fig. 1 nur der Biegeschenkel 7 mit seinen Ausnehmungen 28 zu sehen. Die Ausnehmungen 28 dienen dem Eingriff der Verbindungseinrichtung 9 und damit der Befestigung dieses Biegeschenkels 7 an der Konsoleneinheit 2. Die erfindungswesentliche Niederhalteeinrichtung 10 ist in Fig. 1 nur teilweise zu sehen. Konkret sieht man deren Führungswand 11 und die in dieser Führungswand 11 angeordnete Ausnehmung 15, in die im Crashfall, wie weiter unten im Detail erläutert, die Verbindungseinrichtung 9 eingeführt werden kann. Die restlichen Details zur Biegelasche 5 und zur Niederhalteeinrichtung 10 sowie zu deren Zusammenspiel im Crashfall ergeben sich für dieses erste Ausführungsbeispiel in analoger Weise aus den nachfolgenden Erläuterungen des zweiten Ausführungsbeispiels der Erfindung, wie es anhand der Fig. 2 bis 8 erläutert wird.

Fig. 2 zeigt ein zweites erfindungsgemäßes Ausführungsbeispiel einer verstellbaren Lenksäule 1. Deren Grundaufbau ist analog zum ersten Ausführungsbeispiel und wird daher nicht erneut beschrieben. Der Unterschied der beiden Ausführungsbeispiele zueinander liegt im Wesentlichen darin, dass im ersten Ausführungsbeispiel der Spannbolzen 24 auf der den Befestigungslaschen 22 gegenüberliegenden Seite der Lenkspindellagereinheit 3 angeordnet ist, während in Fig. 2 der Spannbolzen 24 in der gezeigten Montagestellung auf derselben Seite der Lenkspindellagereinheit, wie die Befestigungslaschen, also zwischen der Lenkspindellagereinheit 3 und den Befestigungslaschen 22 angeordnet ist.

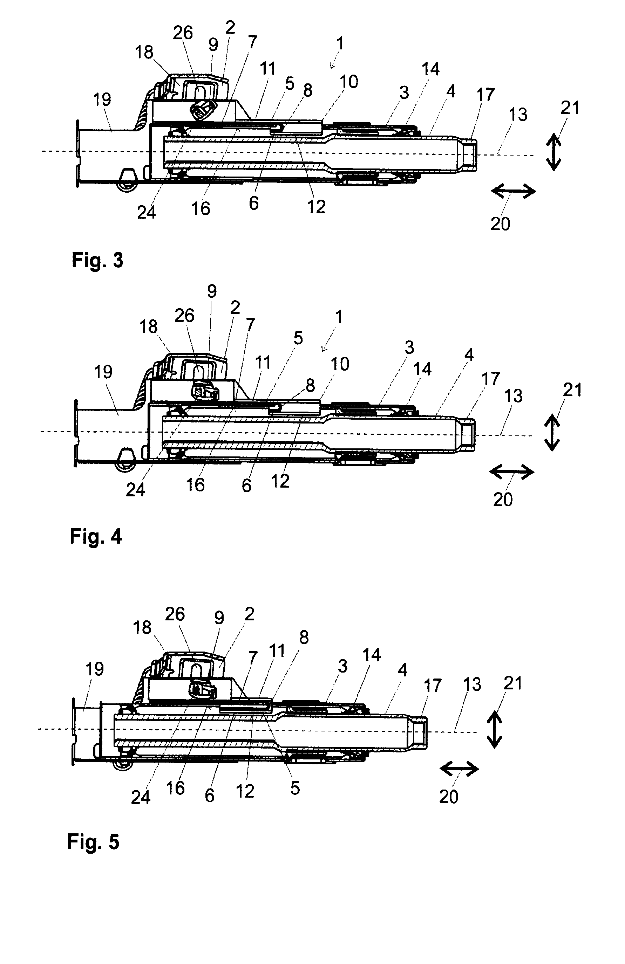

Um das erfindungsgemäße Zusammenwirken von Biegelasche 5 und Niederhalteeinrichtung 10 besser zu veranschaulichen, zeigen die Fig. 3 bis 5 Längsschnitte durch die Lenksäule 1 der Fig. 2. In Fig. 3 ist eine Situation gezeigt, in der die Feststelleinrichtung 25 sich in der geöffneten Stellung befindet, in der die Lenkspindellagereinheit 3 in den Verstellrichtungen 20 und 21 relativ zur Konsoleneinheit 2 verstellbar ist, um die Position des hier nicht dargestellten Lenkrades an den jeweiligen Fahrer anpassen zu können. In dieser Situation befindet sich die Verbindungseinrichtung 9 in der Stellung, in der sie die Biegelasche 5 bzw. deren Biegeschenkel 7 nicht mit der Konsoleneinheit 2 verbindet. Fig. 4 zeigt die Situation, in der sich die Feststelleinrichtung 25 in der geschlossenen Stellung befindet. Dies entspricht einer Betriebsstellung, in der das Fahrzeug im Normalbetrieb gefahren wird. Die lösbare Verbindungseinrichtung 9 ist in diesem Fall in zumindest eine der Ausnehmungen 28 des Biegeschenkels 7 eingerastet, um so den Biegeschenkel 7 an der Konsoleneinheit 2 zu befestigen. Es sind in dieser Betriebsstellung aber auch Stellungen möglich, in denen die hier als Haken mit einem Rastelement ausgeführte Verbindungseinrichtung 9 auf einem der Zwischenstege zwischen den Ausnehmungen 28 des Biegeschenkels 7 aufliegt. In so einem Fall kommt es dann erst bei einer Verschiebung der Lenkspindellagereinheit 3 in Bezug zur Konsoleneinheit 2, wie dies beispielsweise im Crashfall erfolgt, zum Einrasten und damit zum Befestigen des Biegeschenkels 7 an der Konsoleneinheit 2.

Der zweite Biegeschenkel 6 ist in allen diesen Situationen und für alle dargestellten Ausführungsbeispiele permanent mit der Niederhalteeinrichtung 10 und damit mit der Lenkspindellagereinheit 3 verbunden. Im konkreten Ausführungsbeispiel ist er direkt an der zusätzlichen Führungswand 12 der Niederhalteeinrichtung 10 befestigt bzw. fixiert. In den Fig. 3 bis 5 ist besonders gut zu sehen, dass die zusätzliche Führungswand 12 näher an der Drehachse 13, um welche die Lenkspindel 4 drehbar ist, als die diese zusätzliche Führungswand 12 umgebenden Bereiche der Außenwand 14 der Lenkspindellagereinheit 3 angeordnet ist. Weiters ist in diesem Ausführungsbeispiel die Führungswand 11 ebenfalls weiter von der Drehachse 13 entfernt als die zusätzliche Führungswand 12 angeordnet. Die Niederhalteeinrichtung 10 ist somit teilweise in den von der Außenwand 14 der Lenkspindellagereinheit 3 umgebenen Innenraum versenkt, was eine besonders flache Bauweise ermöglicht. Die Biegeschenkel 6 und 7 sind über die Umbiegung 8 miteinander verbunden und zwischen der Führungswand 11 und der zusätzlichen Führungswand 12 geführt. Im gezeigten Ausführungsbeispiel handelt es sich bei der Niederhalteeinrichtung 10 um eine zunächst separat gefertigte Einheit, die an der Lenkspindellagereinheit 3 angeordnet ist. Es wäre aber genauso gut möglich, die Führungswand 11 und 12 durch entsprechende, z.B. taschenartige Ausformungen der Außenwand 14 direkt bzw. als einstückig angeformte Bestandteile in die Lenkspindellagereinheit 3 zu integrieren.

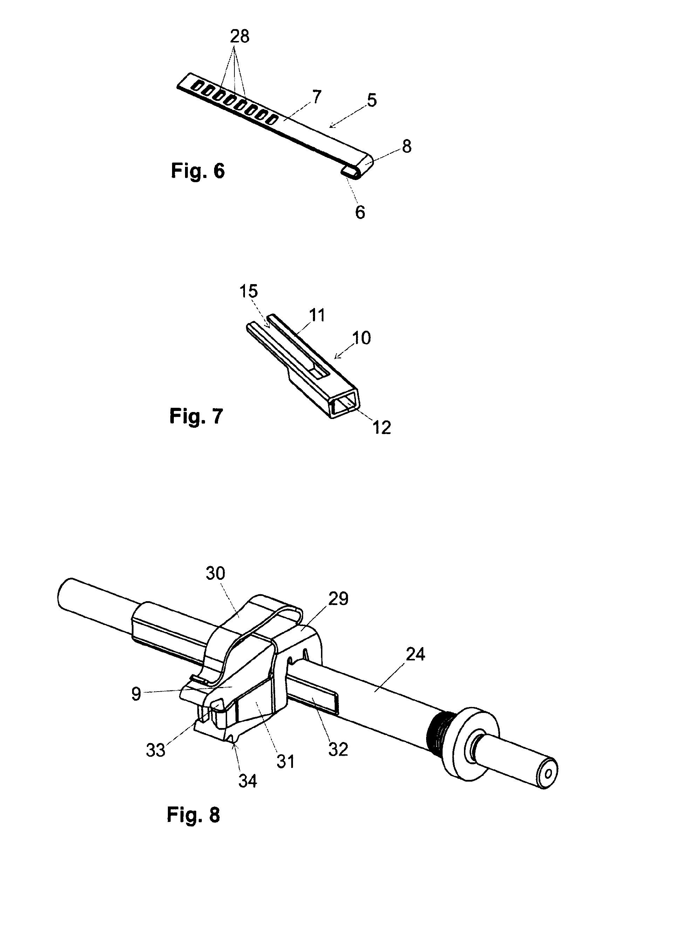

Kommt es nun aus der in Fig. 4 gezeigten normalen Betriebssituation heraus zu einem Fahrzeugcrash, so wird die Lenkspindellagereinheit 3 bei einem entsprechenden Aufschlagen des Fahrzeuglenkers auf das hier nicht dargestellte Lenkrad in die fahrzeugfeste Konsoleneinheit 2 eingeschoben. Bei diesem Einschieben kommt es zu einer Umformung der Biegelasche 5 mit der gezielt Bewegungsenergie abgebaut bzw. absorbiert werden kann. Fig. 5 zeigt die Endstellung eines solchen Energieabsorptionsvorgangs, bei dem die Lenkspindellagereinheit 3 zusammen mit der Lenkspindel 4 und dem daran befestigten (hier nicht dargestellten) Lenkrad in Richtung Fahrzeugfront verschoben wurde, wobei die Lenkspindellagereinheit 3 in die Konsoleneinheit 2 eingeschoben wurde. Während dieses Einschiebevorgangs ist der Biegeschenkel 7 mittels der Verbindungseinrichtung 9 an der Konsoleneinheit 2 fixiert. Der Biegeschenkel 6 ist permanent an der Lenkspindellagereinheit 3 fixiert. Die Niederhalteeinrichtung 10 wird zusammen mit der Lenkspindellagereinheit 3 verschoben. Dabei wird die Biegelasche 5 umgeformt. Die Führungswand 11 verhindert bei diesem Umformvorgang erfindungsgemäß, dass die Biegelasche 5 von der Lenkspindellagereinheit 3 abgehoben bzw. zu weit abgehoben wird. Die Führungswand 12 verhindert, dass die Biegelasche 5 beim Umformvorgang zu weit in den Innenraum der Lenkspindellagereinheit 3 eindringt. Der Bewegungsspielraum der beiden Biegeschenkel 6 und 7 ist über den Zwischenraum zwischen den beiden Führungswänden 11 und 12 vorgegeben bzw. begrenzt. Bei dem genannten Umformvorgang kommen die Biegeschenkel 6 und 7 in der Regel zur Anlage an die jeweiligen Führungswände 11 und 12, sofern sie nicht schon vorher anliegen, wodurch die Niederhalteeinrichtung 10 eine definierte Art der Umformung der Biegelasche 5 vorgibt. Dies führt zu einem sehr definierten Ablauf der Energieabsorption. Um zusätzliche Reibungskräfte an der inneren Oberfläche 16 der Außenwand 14 der Lenkspindellagereinheit 3 zu vermeiden, ist günstigerweise wie in diesem Ausführungsbeispiel vorgesehen, dass die Biegeschenkel 6, vorzugsweise immer, von einer zu einer Drehachse 13, um die die Lenkspindel 4 drehbar ist, weisenden innenliegenden Oberfläche 16 einer Außenwand 14 der Lenkspindellagereinheit 3 beabstandet sind. Bei dieser Konstruktion ist es nicht vorgesehen und nicht erforderlich, den Biegeschenkel 6, der mit der Lenkspindellagereinheit 3 verbunden ist, an der Innenseite der Außenwand 14 zu befestigen, um den Bauraum zu verkleinern, wodurch die Montage vereinfacht wird. Weiters ist darauf hinzuweisen, dass, wie besonders gut in Fig. 7 zu sehen, in die Führungswand 11 zur Begrenzung des Abhebens des an der Konsoleneinheit 2 befestigten bzw. befestigbaren Biegeschenkels 7 eine Ausnehmung 15 eingebracht ist, in welche die hier in Form des Hakens ausgebildete zerstörungsfrei lösbare Verbindungseinrichtung 9 bei der Bewegung der Lenkspindellagereinheit 3 relativ zur Konsoleneinheit 2 eindringen kann. Diese Art der Ausgestaltungsform ermöglicht eine kurze Baulänge der Lenksäule 1.

Auch am Ende des geschilderten Energieabsorptionsvorgangs, bei dem die Biegelasche 5 umgeformt wurde, stehen die Biegeschenkel 6 und 7 nach wie vor nicht aus der Lenkspindellagereinheit 3 heraus oder in diese hinein. Sie sind nach wie vor zwischen den Führungswänden 11 und 12 geführt, was insgesamt die gewünschte flache Bauweise ermöglicht.

Fig. 6 zeigt die Biegelasche 5 im Einbauzustand, also vor dem Umformen im Crashfall, losgelöst von den anderen Komponenten der Lenksäule 1. Fig. 7 zeigt die in diesem Ausführungsbeispiel verwendete Niederhalteeinrichtung 10, welche zunächst als separates Bauteil ausgebildet und dann teilweise versenkt in einer entsprechenden Ausnehmung in der Außenwand 14 der Lenkspindellagereinheit 3 befestigt wird. Wie bereits ausgeführt, können die Führungswände 11 und 12 aber auch als integraler Bestandteil der Lenkspindellagereinheit 3 ausgeformt sein.

Fig. 8 zeigt die hier verwendete hakenartige Verbindungseinrichtung 9 mit einem einzelnen Rastzahn 34, wie sie auf dem Spannbolzen 24 der Feststelleinrichtung 25 angeordnet ist. Eine hier nicht im Detail dargestellte Ausnehmung der hakenförmigen Verbindungseinrichtung, durch die der Spannbolzen 24 hindurch geführt ist, ist so ausgestaltet, dass der Haken bzw. die Verbindungseinrichtung 9 sich frei um den Bolzen 24 drehen könnte. Zur Wirkverbindung von Bolzen 24 und Verbindungseinrichtung 9 ist ein Federkörper 29 auf dem Spannbolzen 24 angeordnet. Der Federkörper 29 umgreift die hakenförmige Verbindungseinrichtung 9 und ist formschlüssig über den Formschluss 32 so am Bolzen 24 befestigt, dass eine Drehung des Bolzens 24 um seine Längsachse zwangsläufig zu einem entsprechenden Mitdrehen des Federkörpers 29 führt. Der Federkörper 29 weist eine Federzunge 30 auf, welche die Verbindungseinrichtung 9 in Richtung hin zum Biegeschenkel 7 drückt bzw. vorspannt. Der Federkörper 29 weist aber zusätzlich auch zwei Mitnehmerarme 31 auf, welche bei entsprechender Drehung des Bolzens 24 und damit des Federkörpers 29 nach einem gewissen Freiweg an den Anschlagelementen 33 der Verbindungseinrichtung 9 anschlagen und so die hakenförmige Verbindungseinrichtung 9 dann in diese Richtung mitnehmen. Mit dieser in Fig. 8 im Detail dargestellten Konstruktion wird erreicht, dass die Federzunge 30 den Rastzahn 34 auf den Biegeschenkel 7 bzw. bei entsprechender Stellung in eine Ausnehmung 28 drückt, solange die Feststelleinrichtung 25 geschlossen ist, was den Situationen in Fig. 4 und 5 entspricht. Wird die Feststelleinrichtung 25 in ihre geöffnete Stellung gebracht, so nehmen die Mitnehmerarme 31 ab einem gewissen Drehwinkel des Bolzens 24 die Verbindungseinrichtung 9 mit, sobald die Mitnehmerarme 31 an den Anschlagelementen 33 anschlagen. Hierdurch wird der Rastzahn 34 vom Biegeschenkel 7 abgehoben, sodass die Situation gemäß Fig. 3 erreicht ist und die Lenkspindellagereinheit 3 zur Einstellung der Position des Lenkrades relativ zur Konsoleneinheit 2 verstellt werden kann, ohne dass dies einen Einfluss auf die Biegelasche 5 hat. Zur Verbesserung des Eingriffs der Verbindungseinrichtung 9 in die Ausnehmungen 28 des Biegestreifens können auch mehrere Rastzähne, auch von unterschiedlicher Größe, vorgesehen sein.

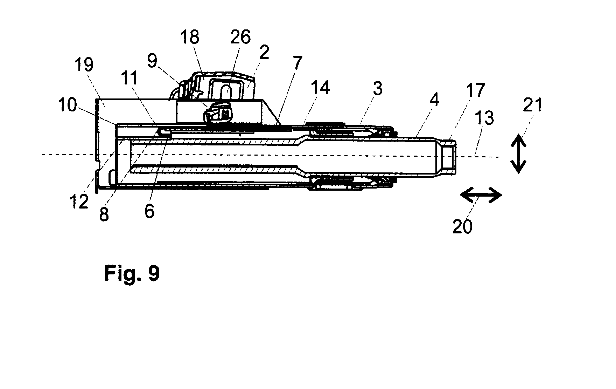

Fig. 9 zeigt ein weiteres Ausführungsbeispiel in einem zur Fig. 5 analogen Längsschnitt. Auch hier ist das Ende eines Umform- und damit Energieabsorptionsvorgangs, bei dem die Lenkspindellagereinheit 3 in die Konsoleneinheit 2 eingeschoben wurde, dargestellt. Bei diesem Ausführungsbeispiel weist die Umbiegung 8 zwischen den beiden Biegeschenkeln 6 und 7 in Richtung Fahrzeugfront also weg vom Montagestutzen 17 für das Lenkrad. Auch in diesem Ausführungsbeispiel gemäß Fig. 9 kann dieselbe Niederhalteeinrichtung 10 erfindungsgemäß verwendet werden, wie sie in den anderen Ausführungsbeispielen bereits erläutert wurde. Ihre Führungswände 11 und 12 begrenzen und führen die Biegeschenkel 6 und 7 beim Umformvorgang entsprechend.

**Legende**

| | | | |
|---|---|---|---|
| zu den Hinweisziffern: | | | |
| 1 | Lenksäule | 29 | Federkörper |
| 2 | Konsoleneinheit | 30 | Federzunge |
| 3 | Lenkspindellagereinheit | 31 | Mitnehmerarm |
| 4 | Lenkspindel | 32 | Formschluss |
| 5 | Biegelasche | 33 | Anschlagelement |
| 6 | Biegeschenkel | 34 | Rastzahn |
| 7 | Biegeschenkel | | |
| 8 | Umbiegung | | |
| 9 | Verbindungseinrichtung | | |
| 10 | Niederhalteeinrichtung | | |
| 11 | Führungswand | | |
| 12 | zusätzliche Führungswand | | |
| 13 | Drehachse | | |
| 14 | Außenwand | | |
| 15 | Ausnehmung | | |
| 16 | innere Oberfläche | | |
| 17 | Montagestutzen | | |
| 18 | Seitenwange | | |
| 19 | Zwischenhebel | | |
| 20 | Verstellrichtung | | |
| 21 | Verstellrichtung | | |
| 22 | Befestigungslasche | | |
| 23 | Nockenscheibe | | |
| 24 | Bolzen | | |
| 25 | Feststelleinrichtung | | |
| 26 | Langloch | | |
| 27 | Handhebel | | |
| 28 | Ausnehmung | | |

## Patentansprüche

1. Lenksäule (1) für ein Kraftfahrzeug, welche zumindest in einer Längsrichtung verstellbar ist, mit einer Konsoleneinheit (2) zur Befestigung der Lenksäule (1) an einer Karosserie des Kraftfahrzeugs und mit zumindest einer Lenkspindellagereinheit (3) zur drehbaren Lagerung einer Lenkspindel (4) der Lenksäule (1) und mit zumindest einer Biegelasche (5) zur Energieabsorption bei einer Bewegung der Lenkspindellagereinheit (3) relativ zur Konsoleneinheit (2) mittels Umformung der Biegelasche (5), wobei zumindest zwei Biegeschenkel (6, 7) der Biegelasche (5) mittels zumindest einer Umbiegung (8) der Biegelasche (5) miteinander verbunden sind und einer der Biegeschenkel (6) an der Lenkspindellagereinheit (3) befestigt ist und der andere Biegeschenkel (7) mittels zumindest einer zerstörungsfrei lösbaren Verbindungseinrichtung (9) an der Konsoleneinheit (2) befestigt oder befestigbar ist, **dadurch gekennzeichnet, dass** an der Lenkspindellagereinheit (3) zumindest eine Niederhalteeinrichtung (10) mit zumindest einer Führungswand (11) zur Begrenzung eines Abhebens des an der Konsoleneinheit (2) befestigten oder befestigbaren Biegeschenkels (7) von der Lenkspindellagereinheit (3) beim Umformen der Biegelasche (5) angeordnet ist.

2. Lenksäule (1) nach Anspruch 1, **dadurch gekennzeichnet, dass** der an der Konsoleneinheit (2) befestigte oder befestigbare Biegeschenkel (7) zumindest beim Umformen der Biegelasche (5) an der Führungswand (11) anliegt.

3. Lenksäule (1) nach Anspruch 1 oder 2, **dadurch gekennzeichnet, dass** die Niederhalteeinrichtung (10) zumindest eine zusätzliche Führungswand (12) aufweist, wobei die Biegeschenkel (6, 7) zumindest bereichsweise zwischen den einander gegenüberliegend angeordneten Führungswänden (11, 12) angeordnet sind.

4. Lenksäule (1) nach Anspruch 3, **dadurch gekennzeichnet, dass** der an der Lenkspindellagereinheit (3) befestigte Biegeschenkel (6) zumindest beim Umformen der Biegelasche (5) an der zusätzlichen Führungswand (12) anliegt.

5. Lenksäule (1) nach einem der vorhergehenden Ansprüche, **dadurch gekennzeichnet, dass** der Biegeschenkel (6), der an der an der Lenkspindellagereinheit (3) befestigt ist, mit einem geringerem Abstand zu einer Drehachse (13), um die die Lenkspindel (4) drehbar ist, als die diesen Biegeschenkel (6) umgebenden Bereiche einer Außenwand (14) der Lenkspindellagereinheit (3) angeordnet ist.

6. Lenksäule (1) nach einem der Ansprüche 1 bis 5, **dadurch gekennzeichnet, dass** die Niederhalteeinrichtung (10) eine zunächst separat gefertigte, an der Lenkspindellagereinheit (3) anordenbare Einheit ist.

7. Lenksäule (1) nach einem der Ansprüche 1 bis 5, **dadurch gekennzeichnet, dass** die Niederhalteeinrichtung (10) ein einstückig angeformter Bestandteil der Lenkspindellagereinheit (3) ist.

8. Lenksäule (1) nach einem der Ansprüche 1 bis 7, **dadurch gekennzeichnet, dass** in die Führungswand (11) zur Begrenzung des Abhebens des an der Konsoleneinheit (2) befestigten oder befestigbaren Biegeschenkels (7) eine Ausnehmung (15) eingebracht ist, in welche die zerstörungsfrei lösbare Verbindungseinrichtung (9) bei einer Bewegung der Lenkspindellagereinheit (3) relativ zur Konsoleneinheit (2) eindringen kann.

9. Lenksäule (1) nach einem der Ansprüche 1 bis 9, **dadurch gekennzeichnet, dass** die zerstörungsfrei lösbare Verbindungseinrichtung (9) einen schwenkbaren Haken mit einem oder mehreren Rastzähnen umfasst.

## Claims

1. A steering column (1) for a motor vehicle, which is adjustable at least in a longitudinal direction, having a bracket unit (2) for securing the steering column (1) to a bodywork of the motor vehicle and having at least one steering shaft bearing unit (3) for the rotatable mounting of a steering shaft (4) of the steering column (1) and having at least one bending tab (5) for energy absorption upon movement of the steering shaft bearing unit (3) relative to the bracket unit (2) by means of deformation of the bending tab (5), wherein at least two bending limbs (6, 7) of the bending tab (5) are connected to one another by means of at least one recurve (8) of the bending tab (5) and one of the bending limbs (6) is secured to the steering shaft bearing unit (3) and the other bending limb (7) is secured or securable to the bracket unit (2) by means of at least one connecting device (9) releasable in a non-destructive manner, **characterized in that** at least one holding-down device (10) is arranged at the steering shaft bearing unit (3) and has at least one guide wall (11) to limit a lifting-off of the bending limb (7) secured or securable to the bracket unit (2) from the steering shaft bearing unit (3) upon deformation of the bending tab (5).

2. A steering column (1) according to claim 1, **characterized in that** the bending limb (7) secured or securable to the bracket unit (2) contacts the guide wall (11), at least upon deformation of the bending tab (5).

3. A steering column (1) according to claim 1 or 2, **characterized in that** the holding-down device (10) has at least one additional guide wall (12), wherein at least regions of the bending limbs (6, 7) are arranged between the guide walls (11, 12) arranged facing one another.

4. A steering column (1) according to claim 3, **characterized in that** the bending limb (6) secured to the steering shaft bearing unit (3) contacts the additional guide wall (12), at least upon deformation of the bending tab (5).

5. A steering column (1) according to any one of the preceding claims, **characterized in that** the bending limb (6), secured to the steering shaft bearing unit (3), is arranged at a smaller distance from a rotational axis (13), about which the steering shaft (4) is rotatable, than are the regions, of an outer wall (14) of the steering shaft bearing unit (3), surrounding this bending limb (6).

6. A steering column (1) according to any one of claims 1 to 5, **characterized in that** the holdingdown device (10) is a unit which is first manufactured separately and which can be arranged at the steering shaft bearing unit (3).

7. A steering column (1) according to any one of claims 1 to 5, **characterized in that** the holdingdown device (10) is an integrally formed component of the steering shaft bearing unit (3).

8. A steering column (1) according to any one of claims 1 to 7, **characterized in that** a cutout (15) is made in the guide wall (11) for limiting the lifting-off of the bending limb (7) secured or securable to the bracket unit (2), into which cutout (15) there can penetrate the connecting device (9), releasable in a non-destructive manner, upon movement of the steering shaft bearing unit (3) relative to the bracket unit (2).

9. A steering column (1) according to any one of claims 1 to 9, **characterized in that** the connecting device (9), releasable in a non-destructive manner, comprises a pivotable hook with one or a plurality of locking teeth.

## Revendications

1. Colonne de direction (1) pour un véhicule automobile, réglable selon au moins une direction longitudinale, comprenant une unité de console (2) pour la fixation de la colonne de direction (1) contre la carrosserie du véhicule automobiles et au moins une unité de palier d'arbre de direction (3) pour le montage rotatif d'un arbre de direction (4) de la colonne de direction (1), et comprenant au moins une languette flexible (5) pour l'absorption d'énergie par déformation de la languette flexible (5) lors d'un déplacement de l'unité de palier d'arbre de direction (3) par rapport à l'unité de console (2), au moins deux branches flexibles (6, 7) de la languette flexible (5) étant reliées l'une à l'autre par au moins un coude (8) de la languette flexible (5) et une des branches flexibles (6) étant fixée contre l'unité de palier d'arbre de direction (3), et l'autre branche flexible (7) étant fixée ou pouvant être fixée contre l'unité de console (2) au moyen d'au moins un dispositif de connexion (9) amovible sans destruction, **caractérisée en ce qu'**au moins un dispositif de serrage (10), comportant au moins une paroi de guidage (11) pour limiter un soulèvement de la branche flexible (7) fixée ou pouvant être fixée contre l'unité de console (2) par rapport à l'unité de palier d'arbre de direction (3) en cas de déformation de la languette flexible (5), est disposé contre l'unité de palier d'arbre de direction (3).

2. Colonne de direction (1) selon la revendication 1, **caractérisée en ce que** la branche flexible (7) fixée ou pouvant être fixée contre l'unité de console (2) repose contre la paroi de guidage (11) au moins lors de la déformation de la languette flexible (5).

3. Colonne de direction (1) selon la revendication 1 ou 2, **caractérisée en ce que** le dispositif de serrage (10) présente au moins une paroi de guidage complémentaire (12), les branches flexibles (6, 7) étant au moins en partie disposées entre les parois de guidage (11, 12) opposées l'une à l'autre.

4. Colonne de direction (1) selon la revendication 3, **caractérisée en ce que** la branche flexible (6) fixée sur le palier d'arbre de direction (3) repose contre la paroi de guidage complémentaire (12) au moins lors de la déformation de la languette flexible (5).

5. Colonne de direction (1) selon l'une des revendications précédentes, **caractérisée en ce que** la branche flexible (6) qui est fixée sur l'unité de palier d'arbre de direction (3) est disposée à une moindre distance d'un axe de rotation (13) autour duquel l'arbre de direction (4) est rotatif, que les zones d'une paroi extérieure (14) de l'unité de palier d'arbre de direction (3) qui entourent ladite branche flexible (6).

6. Colonne de direction (1) selon l'une des revendications 1 à 5, **caractérisée en ce que** le dispositif de serrage (10) est une unité initialement fabriquée séparément pouvant être disposée contre l'unité de palier d'arbre de direction (3).

7. Colonne de direction (1) selon l'une des revendications 1 à 5, **caractérisée en ce que** le dispositif de serrage (10) est un composant formé d'une seule pièce de l'unité de palier d'arbre de direction (3).

8. Colonne de direction (1) selon l'une des revendications 1 à 7, **caractérisée en ce qu'**un évidement (15) est ménagé dans la paroi de guidage (11) pour limiter le soulèvement de la branche flexible (7) fixée ou pouvant être fixée contre l'unité de console (2), où peut pénétrer le dispositif de connexion (9) amovible sans destruction lors d'un déplacement de l'unité de palier d'arbre de direction (3) par rapport à l'unité de console (2).

9. Colonne de direction (1) selon l'une des revendications 1 à 9, **caractérisée en ce que** le dispositif de connexion (9) amovible sans destruction comprend un crochet pivotant avec une ou plusieurs dents d'enclenchement.
